Europäisches Patentamt

European Patent Office

Office européen des brevets

(19)

(11) Veröffentlichungsnummer: **0 233 531**

**A1**

(12) **EUROPÄISCHE PATENTANMELDUNG**

(21) Anmeldenummer: 87101345.4

(22) Anmeldetag: 31.01.87

(51) Int.Cl.³: **F 02 B 53/10**
**F 02 M 45/04**

(30) Priorität: 05.02.86 US 826458

(43) Veröffentlichungstag der Anmeldung:
26.08.87 Patentblatt 87/35

(84) Benannte Vertragsstaaten:
AT BE CH DE ES FR GB IT LI SE

(71) Anmelder: DEERE & COMPANY
1 John Deere Road
Moline Illinois 61265(US)

(72) Erfinder: Poore, Bernard Brandt
707 -51st Avenue
East Moline Illinois 61244(US)

(74) Vertreter: Feldmann, Bernhard
DEERE & COMPANY European Office, Patent Department
Steubenstrasse 36-42 Postfach 503
D-6800 Mannheim 1(DE)

(54) Brennstoffzuführsystem für einen Drehkolbenmotor.

(57) Brennstoffzuführsystem (40) für einen eine erste und eine zweite Einspritzdüse (30,32) aufweisenden Drehkolbenmotor (10) mit einer Brennstoffpumpe (46) und einem Ventil (54) mit einem in einer Ventilbohrung (58) verschiebbaren Ventilteil (60), wobei in jede Stirnseite der Ventilbohrung (58) ein Kanal (66, 68) und mit Abstand zu den Stirnseiten in die Ventilbohrung (58) zwei Radialbohrungen (72,76) münden, von denen eine (72) mit der zweiten Einspritzdüse (32) verbunden und dem einen Kanal (66) zugelegen ist, der mit der Brennstoffpumpe (46) in Verbindung steht, während die andere Radialbohrung (76) mit einer Zuführpumpe (43) verbunden und dem zweiten Kanal (68) zugelegen ist, der mit der ersten Einspritzdüse (30) in Verbindung steht. Der Ventilteil (60) ist zwischen zwei Stellungen verschiebbar, wobei in der ersten Stellung die zur zweiten Einspritzdüse (32) führende Radialbohrung (72) durch den Ventilteil (60) verschlossen und in der zweiten Stellung der Ventilteil (60) diese Radialbohrung (72) freigibt.

## Brennstoffzuführsystem für einen Drehkolbenmotor

Die Erfindung bezieht sich auf ein Brennstoffzuführsystem für einen eine erste und eine zweite Einspritzdüse aufweisenden Drehkolbenmotor mit einer Brennstoffpumpe.

Bei diesem bekannten Brennstoffzuführsystem (US-A-3 894 518) ist als erste Einspritzdüse eine Hilfsdüse und als zweite Einspritzdüse die Haupteinspritzdüse vorgesehen, wobei jeder Düse eine gesonderte Brennstoffpumpe zugeordnet ist, so daß die Kosten, die Komplexität und das Gewicht derartiger Drehkolbenmotoren erheblich erhöht werden.

Die mit der Erfindung zu lösende Aufgabe wird darin gesehen, beide Einspritzdüsen nur von einer Brennstoffpumpe aus zu beschicken.

Diese Aufgabe ist nach der Erfindung durch ein Ventil mit einem in einer Ventilbohrung verschiebbaren Ventilteil gelöst worden, wobei in jede Stirnseite der Ventilbohrung zwei Radialbohrungen münden, von denen eine mit der zweiten Einspritzdüse verbunden und dem einen Kanal zugelegen ist, der mit der Brennstoffpumpe in Verbindung steht, während die andere Radialbohrung mit einer Zuführpumpe verbunden und dem zweiten Kanal zugelegen ist, der mit der ersten Einspritzdüse in Verbindung steht, wobei ferner der Ventilteil zwischen zwei Stellungen verschiebbar ist, wobei in der ersten Stellung die zur zweiten Einspritzdüse führende Radialbohrung durch den Ventilteil verschlossen und in der zweiten Stellung der Ventilteil diese Radialbohrung freigibt. Auf diese Weise braucht der Hilfsdüse keine gesonderte Brennstoffpumpe, die über den Drehkolbenmotor zu steuern wäre, zugeordnet zu werden, da die Hilfsdüse von der Zuführpumpe in Abhängigkeit von der Förderung der Brennstoffpumpe über das Ventil mit Brennstoff beschickt werden kann. Bei einem solchen System ist die Zuführpumpe zum Laden der Brennstoffpumpe sowieso vorhanden und das Beschicken der zweiten Einspritzdüse wird dann in
einfacher Weise durch den in der Ventilbohrung verschiebbaren Ventilteil bewirkt, wobei bei der Verschiebung des
Ventilteils aus der ersten Stellung in seine zweite eine
Beschickung der ersten Einspritzdüse mit Brennstoff erfolgt.

Zweckmäßig kann nach der Erfindung der Ventilteil in seine
zweite Stellung entgegen der Wirkung einer Feder verstellbar sein, so daß der Ventilteil immer wieder in seine erste
Stellung zurückkehrt, wenn der Druck von der Brennstoffpumpe nachläßt. Andererseits bewirkt der Druck der Brennstoffpumpe, daß der Ventilteil aus seiner ersten Stellung in
seine zweite verstellt wird. Vorteilhaft kann nach der Erfindung der Ventilteil eine derartige Länge aufweisen, daß
an jeder Stirnseite der Ventilbohrung ein Raum entsteht,
wobei der erste Raum ständig mit dem zur Brennstoffpumpe
führenden Kanal und der zweite Raum, der die Feder aufnimmt,
ständig mit dem zur ersten Einspritzdüse führenden Kanal in
Verbindung steht, so daß sich in dem ersten Raum infolge der
Förderung der Brennstoffpumpe ein Druck aufbauen kann, der
bei Überwindung der Federkraft die Brennstoffmenge, die sich
in dem zweiten Raum befindet, zu der ersten Einspritzdüse
fördert und zeitverzögert, die Verbindung zu der zweiten
Einspritzdüse freigibt, da die zugehörigen Radialbohrungen
mit Abstand zu den Stirnseiten in der Ventilbohrung angeordnet sind. Hierbei kann der Ventilteil auch so ausgebildet
sein, daß er, wenn er eine Radialbohrung freigibt, eine
andere verschließt. Vorteilhaft verlaufen die Kanäle in
Längsrichtung der Ventilbohrung.

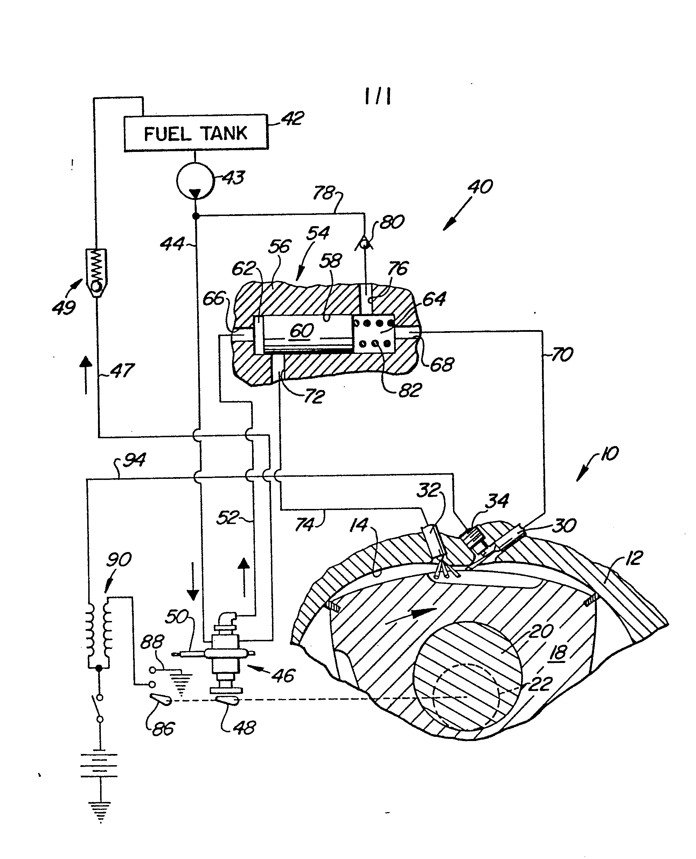

In der Zeichnung ist ein nachfolgend näher erläutertes
Ausführungsbeispiel der Erfindung dargestellt.

In der einzigen Figur ist ein Drehkolbenmotor mit 10 und
sein Gehäuse mit 12 bezeichnet, das einen Motorraum 14 zur
Aufnahme eines Rotors 18 auf einem Exzenterteil 20 an einer
Welle 22 bildet, wobei sich die Welle koaxial durch das Gehäuse 12 erstreckt und auf nicht gezeigten Lagern gelagert
ist.

Der Drehkolbenmotor 10 ist außerdem mit einem entsprechenden
nicht dargestellten Zahnwerk zwischen dem Rotor 18 und dem
Gehäuse versehen, um die Relativdrehung des Rotors zu steuern. Solches Zahnwerk ist herkömmlicher Bauart, wie es beispielsweise in dem Dokument US-A-2 988 065 offenbart ist.
Der Drehkolbenmotor 10 ist ferner noch mit einer als Hilfsdüse ausgebildeten ersten Einspritzdüse 30 und einer als
Hauptdüse dienenden zweiten Einspritzdüse 32 sowie einer
Zündkerze 34 versehen, wie sie beispielsweise in dem Dokument US-A-4 083 329 dargestellt sind. In bekannter Weise
dient der von der Einspritzdüse 30 kommende Zündfunken als
Hilfsflamme, um den Brennstoff von der Einspritzdüse 32 zu
entzünden.

Ein Brennstoffzuführsystem für die Einspritzdüsen 30 und 32
ist mit einem Brennstofftank 42 ausgerüstet, und eine Zuführpumpe 43 pumpt Brennstoff aus dem Brennstofftank 42 in
Leitungen 44 und 78. Hierbei verbindet die Leitung 44 den
Brennstofftank 42 mit einer herkömmlichen Brennstoffpumpe
46, die vom Motor über Nocken 48 angetrieben wird, wie es
vorzugsweise in dem Dokument US-A-3 894 518 dargestellt ist.
Die Brennstoffpumpe 46 weist eine linear verstellbare Stellvorrichtung 50 auf, um den wirksamen Pumpenhub zu verstellen, wodurch die Brennstoffmenge, die durch eine Leitung 52
zu einem Ventil 54 gelangt, reguliert wird. Eine Rücklaufleitung 47 verbindet die Brennstoffpumpe 46 mit dem Brennstofftank 42 über ein Regulierventil 49 oder eine nicht
dargestellte Drossel.

Das Ventil 54 ist mit einem Gehäuse 56 versehen, das eine
Ventilbohrung 58 aufweist und einen Ventilteil 60 in Form
eines hin- und herbewegbaren Kolben aufweist. Der Ventilteil
ist in der Ventilbohrung 58 abgedichtet verschiebbar und
wirkt mit den Stirnwänden der Ventilbohrung 58 zusammen, um einen ersten oder Hauptraum 62 und einen zweiten oder Pilotraum 64 zu bilden. An dem einen Ende der Ventilbohrung 58 weist das Gehäuse 56 einen sich in Längsrichtung der Ventilbohrung erstreckenden Kanal 66 auf, der mit der Brennstoffpumpe 46 über die Leitung 52 verbunden ist, so daß Brennstoff in den Raum 62 gelangen kann. An dem gegenüberliegenden Ende der Ventilbohrung 58 ist das Gehäuse mit einem weiteren sich ebenfalls in Längsrichtung der Ventilbohrung erstreckenden Kanal 68 versehen, der den Raum 64 mit der ersten Einspritzdüse 30 über eine Leitung 70 verbindet. Nahe dem einen Ende der Ventilbohrung 58 ist eine Radialbohrung 72 vorgesehen, die die Ventilbohrung 58 mit der zweiten Einspritzdüse 32 über eine Leitung 74 verbindet. Die Radialbohrung 72 weist zu der Stirnwand der Ventilbohrung 56 einen Axialabstand auf, wobei die Stirnwand dem in dem Raum 62 herrschenden von der Brennstoffpumpe 46 erzeugten Druck ausgesetzt ist. Nahe dem anderen Ende der Ventilbohrung ist eine weitere Radialbohrung 76 vorgesehen, die in die Ventilbohrung 58 mündet und mit dem Brennstofftank 42 über die Leitung 78, die ein Rückschlagventil 80 aufweist, verbunden ist. Eine Feder 82 ist in dem Raum 64 derart angeordnet, daß der Ventilteil 60 mit Bezug auf die Zeichnung nach links in Richtung auf den ersten Raum 62 gedrückt wird. Ein zusätzlicher Drehkolbenmotor angetriebener Nocken 86 ist vorgesehen, um Zündkontakte 88 eines Zündkreises 90 zu betätigen, der über eine Leitung 94 mit der Zündkerze 34 verbunden ist.

Bevor nun eine erste Zündung erfolgt, wird die Feder 82 den Ventilteil 60 in Richtung auf die linke Stirnwand in der Ventilbohrung 58 im Bereich des Kanales 66 drücken. Sobald nun die Brennstoffpumpe 46 die Leitung 52 druckbeaufschlagt, wird Brennstoff in den Raum 62 über den Kanal 66 gelangen, wodurch durch den hier entstehenden Druck der Ventilteil 60 mit Bezug auf die Zeichnung nach rechts verschoben wird. Diese Bewegung des Ventilteils 16 drückt die Feder 82 zusammen und bewirkt, daß eine Hilfsmenge von Brennstoff aus der zweiten Kammer 64 zu der ersten Einspritzdüse 30 über den Kanal 68 und die Leitung 70 gelangt. Bei der in der Zeichnung dargestellten Stellung des Ventilteiles 60, die einer ersten Position des Ventilteiles entspricht, ist die Radialbohrung 72 verschlossen, und bei sich aufbauendem Druck in dem Raum 62 wird bei der Verschiebung des Ventilteiles in Richtung auf den Raum 64 die Radialbohrung 72 geöffnet und gegebenenfalls die Radialbohrung 76 verschlossen, so daß Brennstoff von der Brennstoffpumpe 46 zu der zweiten Einspritzdüse 32 oder der Hauptdüse über die Leitung 52, den Kanal 66, den Raum 62, die Radialbohrung 72 und die Leitung 74 gelangen kann. Diese Bewegung des Ventilteiles 60 hält solange an, bis der Druck in dem Raum 62 gegen den Druck der Feder 82 ausbalanciert ist. Nach einem bestimmten Zeittakt wird der von der Brennstoffpumpe 46 herrührende Druck reduziert, und die Feder 82 kann den Ventilteil 60 zurück in Richtung auf die linke Stirnwand der Ventilbohrung 58 verschieben, wobei die Radialbohrung 72 wieder geschlossen und gegebenenfalls die Radialbohrung 56 geöffnet wird, wobei er dann in dieser Stellung verbleibt, bis daß der nächste Zündtakt erfolgt. Durch das in der Leitung 52 vorgesehene Ventil 54 wird damit über den Druck von der Brennstoffpumpe 46 in dem ersten Raum ein Druck aufgebaut, der bewirkt, daß der in dem Raum 64 angesammelte Brennstoff unter Druck in dosierter Menge in die erste Einspritzdüse 30 gelangt, wobei dann, sobald der Druck in dem ersten Raum 62 nachläßt, die Feder 82 zur Wirkung kommt und den Ventilteil 60 zurückverschiebt, wodurch ein scharfes Abreisen des Brennstoffzuflußes in die Einspritzdüse 32 erreicht wird.

Patentansprüche
_____

1. Brennstoffzuführsystem (40) für einen eine erste und eine zweite Einspritzdüse (30, 32) aufweisenden Drehkolbenmotor (10) mit einer Brennstoffpumpe (46), gekennzeichnet durch ein Ventil (54) mit einem in einer Ventilbohrung (58) verschiebbaren Ventilteil (60), wobei in jede Stirnseite der Ventilbohrung (58) ein Kanal (66, 68) und mit Abstand zu den Stirnseiten in die Ventilbohrung (58) zwei Radialbohrungen (72, 76) münden, von denen eine (72) mit der zweiten Einspritzdüse (32) verbunden und dem einen Kanal (66) zugelegen ist, der mit der Brennstoffpumpe (46) in Verbindung steht, während die andere Radialbohrung (76) mit einer Zuführpumpe (43) verbunden und dem zweiten Kanal (68) zugelegen ist, der mit der ersten Einspritzdüse (30) in Verbindung steht, ferner dadurch gekennzeichnet, daß der Ventilteil (60) zwischen zwei Stellungen verschiebbar ist, wobei in der ersten Stellung die zur zweiten Einspritzdüse (32) führende Radialbohrung (72) durch den Ventilteil (60) verschlossen und in der zweiten Stellung der Ventilteil (60) diese Radialbohrung (72) freigibt.

2. Brennstoffzuführsystem nach Anspruch 1, dadurch gekennzeichnet, daß der Ventilteil (60) in seine zweite Stellung entgegen der Wirkung einer Feder (82) verstellbar ist.

3.   Brennstoffzuführsystem nach Anspruch 1 oder 2, dadurch
     gekennzeichnet, daß der Ventilteil (60) eine derartige
     Länge aufweist, daß an jeder Stirnseite der Ventilbohrung (58) ein Raum (62, 64) entsteht, wobei der erste
     Raum (62) ständig mit dem zur Brennstoffpumpe (46) führenden Kanal (66) und der zweite Raum (64), der die
     Feder (82) aufnimmt, ständig mit dem zur ersten Einspritzdüse (30) führenden Kanal (68) in Verbindung
     steht.

4.   Brennstoffzuführsystem nach einem oder mehreren der
     vorherigen Ansprüche, dadurch gekennzeichnet, daß die
     Kanäle (66, 68) in Längsrichtung der Ventilbohrung (58)
     verlaufen.

FUEL TANK

**Europäisches
Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | DE-A-2 719 683 (CURTISS-WRIGHT) * Seite 13, Zeile 7 - Seite 15, Zeile 7; Figur 6 * | 1-4 | F 02 B 53/10 F 02 M 45/04 |
| Y | EP-A-0 141 044 (BOSCH) * Seite 7, Zeile 14 - Seite 12, Zeile 18; Figuren 1,2 * | 1-4 | |
| A | DE-A-3 330 772 (BOSCH) * Zusammenfassung; Figur * | 1-3 | |
| D,A | US-A-3 894 518 (GAVRUN et al.) | | |

-----

| | RECHERCHIERTE SACHGEBIETE (Int. Cl.4) |
|---|---|
| | F 02 B 53/00 F 02 M 45/00 F 02 M 63/00 |

Der vorliegende Recherchenbericht wurde für alle Patentansprüche erstellt.

| Recherchenort | Abschlußdatum der Recherche | Prüfer |
|---|---|---|
| BERLIN | 30-04-1987 | LEMBLE Y.A.F.M. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82